(19) Europäisches Patentamt / European Patent Office / Office européen des brevets

(11) **EP 3 353 573 B1**

(12) **FASCICULE DE BREVET EUROPEEN**

(45) Date de publication et mention de la délivrance du brevet:
**18.03.2020 Bulletin 2020/12**

(21) Numéro de dépôt: **16763008.6**

(22) Date de dépôt: **02.09.2016**

(51) Int Cl.:
*G01S 19/50* (2010.01)  *G01S 19/14* (2010.01)
*G01S 19/40* (2010.01)  *G01S 19/43* (2010.01)
*G01S 19/48* (2010.01)  *G01S 19/49* (2010.01)

(86) Numéro de dépôt international:
**PCT/EP2016/070779**

(87) Numéro de publication internationale:
**WO 2017/050543 (30.03.2017 Gazette 2017/13)**

(54) **PROCÉDÉ ET SYSTÈME DE POSITIONNEMENT FERROVIAIRE**

VERFAHREN UND SYSTEM ZUR BAHNPOSITIONIERUNG

RAILWAY POSITIONING METHOD AND SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.09.2015 FR 1501982**

(43) Date de publication de la demande:
**01.08.2018 Bulletin 2018/31**

(73) Titulaire: **Thales**
**92400 Courbevoie (FR)**

(72) Inventeur: **REVOL, Marc**
**26120 Upic (FR)**

(74) Mandataire: **Brunelli, Gérald**
**Marks & Clerk France**
**Immeuble Visium**
**22, avenue Aristide Briand**
**94117 Arcueil Cedex (FR)**

(56) Documents cités:
**EP-A1- 2 853 922       FR-A1- 2 971 857**
**US-A1- 2005 134 503**

• **BEDRICH S ET AL: "GNSS-Based Sensor Fusion for Telematic Applications in Railway Traffic", GNSS 2004 - PROCEEDINGS OF THE 17TH INTERNATIONAL TECHNICAL MEETING OF THE SATELLITE DIVISION OF THE INSTITUTE OF NAVIGATION (ION GNSS 2004), THE INSTITUTE OF NAVIGATION, 8551 RIXLEW LANE SUITE 360 MANASSAS, VA 20109, USA, 24 septembre 2004 (2004-09-24), pages 681-691, XP056009183,**

**Description**

L'invention porte sur un procédé et un système de positionnement ferroviaire à haut niveau d'intégrité visant un objectif de risque de non intégrité de la position et de la vitesse de l'ordre de $10^{-9}$ /h à $10^{-11}$/h.

Le positionnement de convois ferroviaires requiert un haut niveau d'intégrité, actuellement atteint par des moyens de localisation non autonomes au train, associés à des infrastructures des voies, comme des capteurs de passage au sol, des balises RFID, ou une cartographie précise et intègre des voies, ...

Les coûts de maintenance, les difficultés de contrôle et les efforts de déploiement de tels dispositifs présentent cependant une limitation à leur développement, ainsi qu'à l'amélioration de leur performance.

L'utilisation de la localisation par un système de navigation par satellites, ou GNSS pour acronyme de "Global Navigation Satellite System" en langue anglaise, pour le positionnement de trains, vise une localisation autonome (réalisée à bord du train) sans autres moyens au sol, avec des niveaux d'intégrité compatibles avec les objectifs recherchés dans le domaine ferroviaire.

Cependant, de tels objectifs (de l'ordre de 10-11/h) sont bien supérieurs aux capacités d'intégrité fournies par les systèmes GNSS, même lorsqu'elles sont augmentées par des moyens au sol dédiés tels que ceux d'un système d'augmentation spatial ou SBAS pour acronyme de "satellite-based augmentation system", pour assurer la surveillance des signaux (typiquement avec un risque de non intégrité de l'ordre de 10-7/h).

De plus, actuellement, seule la constellation GPS permet une localisation sécurisée, dans les domaines de précision visés (en termes de rayon de protection), et il n'est pas envisageable de bénéficier à court terme de contrôle croisé avec d'autres constellations.

Une limitation importante à la réduction du risque de non intégrité du positionnement par GNSS est liée aux dégradations des mesures GNSS dues à l'environnement de réception locale au récepteur (notamment les trajets multiples et les interférences).

Dans des environnements non contrôlés tels que ceux du rail, l'occurrence et l'amplitude des erreurs générées par ces perturbations locales s'écartent notablement de la distribution statistique des erreurs de mesures GNSS, admise comme une distribution Gaussienne.

Ces erreurs peuvent difficilement être surveillées par un récepteur instantané ("snapshot" en langue anglaise), dont les bruits de mesure ne permettent pas de détecter les erreurs avec un niveau de confiance suffisant (ou PND pour acronyme de "probabilité de non détection"), dans le rayon de protection objectif.

Une alternative à cette limitation consiste à améliorer la précision des mesures par axes à vue (et donc de positionnement absolu) par intégration dans le temps des mesures de pseudo-distances, après compensation du déplacement d'un porteur embarquant un récepteur GNSS grâce à l'utilisation de la phase de la porteuse (les mesures fortement bruitées de pseudo-distances subissent un filtrage code-porteuse sur un horizon dépendant du niveau de réduction souhaité).

Pour un rayon de protection souhaité, le filtrage par la porteuse permet :

- de réduire l'écart-type de l'imprécision de la contribution Gaussienne du bruit de mesure, et
- d'identifier avec une performance accrue (PND plus faible) les erreurs liées aux perturbations locales, ceci afin de les exclure de la résolution de position.

Ces deux conditions sont indispensables pour dépasser les niveaux de risques d'intégrité couramment attribués au positionnement par satellites.

Cependant, un tel filtrage par la phase de porteuse n'est réalisable que dans le cas de récepteurs GNSS bi-fréquences (GPS militaire "P(Y)", ou récepteurs de géodésie fixes à "verrouillage de phase partielle sans code" ou "semi-codeless tracking" en langue anglaise), ceci en raison de la divergence de phase de porteuse avec le temps liée à l'évolution de la propagation Ionosphérique.

Il n'existe pas actuellement de moyen de réalisation d'un filtrage code-porteuse mono-fréquence insensible à l'effet de divergence ionosphérique.

Un but de l'invention est de pallier les problèmes précédemment cités.

La publication "GNSS-Based Sensor Fusion for Telematic Applications in Railway Traffic",Auteur S. Bedrich, GNSS 2004 - PROCEEDINGS OF THE 17TH INTERNATIONAL TECHNICAL MEETING OF THE SATELLITE DIVISION OF THE INSTITUTE OF NAVIGATION (ION GNSS 2004), THE INSTITUTE OF NAVIGATION, 8551 RIXLEW LANE SUITE 360 MANASSAS, VA 20109, USA, 24 septembre 2004 (2004-09-24), pages 681-69, divulgue un procédé de positionnement ferroviaire, à partir du déplacement d'un train déterminé par un récepteur de signaux d'un système de navigation par satellites embarqué à bord du train, et du déplacement dudit train déterminé par un odomètre embarqué à bord du train et une cartographie des voies ferroviaires, voir système INTEGRAIL décrit au point 3.2. Un système EGNOS produit des corrections différentielles pour la ionosphère, les horloges de satellite, et l' éphémérides.

Il est proposé, selon un aspect de l'invention, un procédé de positionnement ferroviaire, à partir du déplacement d'un train déterminé par un récepteur de signaux d'un système de navigation par satellites embarqué à bord du train, et du déplacement dudit train déterminé par un odomètre embarqué à bord du train et une cartographie des voies ferroviaires, par détermination périodique (toutes les 1 à 10 secondes) du biais de propagation ionosphérique correspondant à un biais de propagation de la phase de porteuse de signaux du système de navigation par satellites, comprenant les étapes consistant à, par axe à vue des satellites du système de navigation :

- estimer le biais de dérive ionosphérique sur une durée d'observation par différence entre une estimation de Doppler intégré réalisée par le récepteur et une estimation biaisée du déplacement du train réalisée par l'odomètre;
- estimer le biais de dérive odométrique et le biais de dérive de l'horloge locale du récepteur, par résolution par moindres carrés, de la vitesse du train, du biais de dérive de l'horloge locale du récepteur, et du biais de dérive odométrique;
- corriger l'estimation de la dérive ionosphérique, par soustraction du biais de dérive odométrique estimé; et
- corriger le terme de Doppler intégré par le biais de dérive de l'horloge locale du récepteur et de dérive ionosphérique, et corriger les écarts de pseudo-distance par le biais de dérive ionosphérique.

Ainsi, l'observation du biais de dérive de l'odomètre permet une mesure du déplacement du porteur (train) sur un parcours curviligne connu qui peut être utilisé comme référence pour l'observation de la dérive du biais ionosphérique.

Les mesures GNSS mono-fréquence de pseudo-distances et de Doppler intégré peuvent être ainsi corrigées de l'effet de dérive du retard de groupe et de la phase de la porteuse, qui limite dans le cas contraire la capacité de convergence du filtrage code-porteuse, usuellement appliquée pour réduire l'erreur de pseudo-distance.

Dans un mode de mise en œuvre, le procédé comprend, en outre, une étape consistant à, par axe à vue des satellites du système de navigation, filtrer, les mesures de pseudo-distances par les mesures de Doppler intégrés débarrassées de leur biais ionosphérique sur une durée allant de quelques dizaines de secondes à quelques centaines de secondes.

Ainsi, on réalise un filtrage du code par la porteuse assurant une convergence à moyen terme (sur plusieurs dizaines de secondes) de la pseudo-distance filtrée qui ne soit pas biaisée par la variation temporelle de l'erreur ionosphérique.

Selon un mode de mise en œuvre, le procédé comprend, en outre, une étape consistant à, par axe à vue des satellites du système de navigation, estimer périodiquement (toutes 10 minutes à 30 minutes environ) l'erreur de retard ionosphérique à partir des résidus de pseudo-distance issue du filtrage code-porteuse, fournis par résolution au moindres carrés de la position et du temps du récepteur en mono-fréquence.

Ainsi, le bruit d'estimation de la pseudo-distance ayant pu être réduit significativement par filtrage code porteuse, du fait de la suppression de la dérive de l'erreur ionosphérique, le retard de propagation ionosphérique constitue alors le budget majeur de l'erreur de pseudo-distance par axe à vue qui est observée au travers des résidus de pseudo-distance. Le biais de retard ionosphérique par axe à vue est donc rendu observable à partir de l'estimation des résidus de pseudo-distances filtrées, issue de la résolution par moindre carré de la position (PVT) GNSS.

Dans un mode de mise en œuvre, le procédé comprend, en outre, une étape consistant :

- à réaliser une première estimation (toutes les secondes) des résidus instantanés de pseudo-distances filtrées, obtenus par d'une première étape de résolution par moindres carrés de la position et du biais de temps de l'horloge locale du récepteur,
- puis à filtrer ces résidus instantanés de pseudo-distances sur une durée de 10 secondes à 100 secondes,
- et enfin à corriger les pseudo-distances obtenues ultérieurement avec ces résidus filtrés mémorisés, sur un horizon de temps de 10 minutes à 30 minutes.

Ainsi, les mesures de pseudo-distance filtrées sont débarrassées des biais de retard ionosphériques.

Dans un mode de mise en œuvre, le procédé comprend, en outre, une étape consistant à résoudre par moindres carrés la position et le biais de temps de l'horloge locale du récepteur, à partir desdites mesures de pseudo-distances filtrées.

Ainsi, les performances de précision atteintes sont du niveau de celles obtenues avec les systèmes de positionnement différentiels, mais sans infrastructures fixes au sol nécessaires pour observer les biais de propagation ionosphériques.

Selon un mode de mise en œuvre, l'estimation des termes d'erreur ionosphérique par axe à vue satellite est effectuée sur une durée comprise entre 10 et 100 secondes, et répétée toutes les 10 minutes à 30 minutes environ.

Ainsi, la correction des erreurs ionosphériques est actualisée régulièrement de manière à s'adapter aux évolutions locales et temporelles des erreurs de propagation ionosphériques.

Dans un mode de mise en œuvre, ladite durée est d'une seconde.

Il est également proposé, selon un autre aspect de l'invention, un système de positionnement ferroviaire, à partir du déplacement d'un train déterminé par un récepteur de signaux d'un système de navigation par satellites embarqué à bord du train, et du déplacement dudit train déterminé par un odomètre embarqué à bord du train et une cartographie des voies ferroviaires, par détermination du biais de propagation ionosphérique correspondant à un biais de propagation de la phase de porteuse de signaux du système de navigation par satellites, comprenant un calculateur configuré pour effectuer les étapes consistant à, par axe à vue des satellites du système de navigation :

- estimer la dérive ionosphérique biaisée par différence entre un terme de Doppler intégré déterminé par le récepteur et une estimation biaisée du déplacement du train par l'odomètre;
- estimer le biais de dérive odométrique et le biais de dérive de l'horloge locale du récepteur et de dérive odométrique, par résolution par moindres carrés de la vitesse déterminée par le système de navigation par satellites, du biais de dérive de l'horloge locale du récepteur, et du biais de dérive odométrique;
- corriger l'estimation de la dérive ionosphérique, par soustraction du biais de dérive odométrique estimé; et
- corriger le terme de Doppler intégré par le biais de dérive de l'horloge locale du récepteur et de dérive ionosphérique, et corriger les écarts de pseudo-distance par le biais de dérive ionosphérique.

L'invention sera mieux comprise à l'étude de quelques modes de réalisation décrits à titre d'exemples nullement limitatifs et illustrés par les dessins annexés sur lesquels :

- la figure 1 illustre schématiquement la projection du vecteur vitesse du train en direction des axes à vus des satellites.
- la figure 2 illustre schématiquement un mode de mise en oeuvre du procédé selon un aspect de l'invention.

Sur les différentes figures, les éléments ayant des références identiques sont identiques.
La présente invention tire profit du fait que le train se déplace sur des voies dont le plan est parfaitement connu ou tout du moins avec une confiance suffisante reconnue par l'état de l'art du domaine.
En première approche, sous l'hypothèse simplificatrice que la mesure odométrique n'est pas biaisée, l'invention vise à identifier la dérive de l'erreur de retard de propagation ionosphérique (également appelée de façon raccourcie dérive ionosphérique dans la suite de la présente description) par comparaison du déplacement correspondant à l'évolution de la phase de porteuse par axe à vue de satellite (dans l'axe à vue de satellite), avec le déplacement selon la carte mesuré par l'odomètre embarqué à bord du train.
La comparaison des déplacements GNSS et odométrique fournit à chaque instant la dérive ionosphérique en direction de chacun des axes à vue des satellites du système GNSS.
Les mesures de phase de porteuse GNSS peuvent ainsi être débarrassées des dérives de l'erreur ionosphérique, et donc permettre de réaliser un filtrage à long terme efficace de type code-porteuse, pour gagner en précision et en intégrité.
Cependant, il est bien connu que les mesures odométriques dérivement rapidement (environ de 5% à 10% de la distance parcourue), ce qui rendrait cette approche non utilisable puisqu'on retrouverait alors dans l'erreur de position GNSS l'erreur liée à la dérive de l'odomètre.
La compensation du déplacement mesuré à partir du Doppler intégré par le déplacement estimé par l'odomètre fait donc apparaître un biais résiduel sur l'estimation de la dérive du retard ionosphérique par axe à vue, $bd_{iono_i}$, égal à la projection du biais de déplacement odométrique $\beta_{odo}\mathbf{t}$ sur chacune des direction $\vec{s_i}$ des axes satellites :
Soit,

$Dep_{vrai}$ : le déplacement vrai du train sur sa direction de déplacement **t,** sur la durée d'observation $\Delta t$,, en mètres
$d_{iono}$ : la dérive (inconnue) du retard ionosphérique, ramenée en mètres, dans la direction $s_i$ du satellite i, et sur la durée d'observation $\Delta t$,
$\beta_{odo}$ : la dérive (inconnue) de la mesure du déplacement, en mètres, fournie par l'odomètre (aussi appelé biais de dérive odométrique par la suite) dans la direction du déplacement **t,** et sur la durée d'observation $\Delta t$,
$Dop\_int_i$ : le Doppler intégré , ramené en mètres, mesuré par le récepteur à partir de la phase porteuse dans la direction $s_i$ du satellite i, et sur la durée d'observation $\Delta t$...
$Dep_{odo}$ : le déplacement, en mètres, mesuré par l'odomètre dans la direction **t** du déplacement t du train, et sur la durée d'observation $\Delta t$, et
**t** : le vecteur directeur unitaire en radians du déplacement du train, supposé constant sur la durée d'observation $\Delta t$, ...

On peut écrire les relations suivantes :

$$Dop\_\mathrm{int}_i\,\mathbf{s}_i = (Dep_{vrai}\mathbf{t}\circ\mathbf{s}_i)\mathbf{s}_i + d_{iono_i}\mathbf{s}_i$$

$$Dep_{odo}\mathbf{t} = Dep_{vrai}\mathbf{t} + \beta_{odo}\mathbf{t}$$

Dans lesquelles, l'opérateur " ° " représente le produit scalaire entre les vecteurs,
L'estimation de la dérive ionosphérique $\hat{d}_{iono_i}\mathbf{s}_i$ (dans la direction de l'axe à vue du satellite i, si) réalisée par la différence entre le terme de Doppler intégré issue du récepteur et l'estimation de la distance parcourue fournie par l'odomètre (supposé sans biais), s'écrit sous la forme suivante :

$$\hat{d}_{iono_i}\mathbf{s}_i = Dop\_\mathrm{int}_i\,\mathbf{s}_i - \left(\hat{Dep}_{vrai}\mathbf{t} \circ \mathbf{s}_i\right)\mathbf{s}_i$$

Dans laquelle:

$$\hat{Dep}_{vrai}\mathbf{t} = Dep_{odo}\mathbf{t}$$

d'où la relation suivante:

$$\hat{d}_{iono_i}\mathbf{s}_i = Dop\_\mathrm{int}_i\,\mathbf{s}_i - \left(Dep_{odo}\mathbf{t} \circ \mathbf{s}_i\right)\mathbf{s}_i$$

dans laquelle:

$\mathbf{t}$ représente le vecteur directeur unitaire du déplacement du train,
$\mathbf{s}_i$ représente le vecteur directeur unitaire de l'axe à vue du satellite i,
d'où, on a:

$$\hat{d}_{iono_i}\mathbf{s}_i = d_{iono_i}\mathbf{s}_i + \left(\beta_{odo}\mathbf{t} \circ \mathbf{s}_i\right)$$

L'estimation de la dérive ionosphérique (dérive ionosphérique biaisée) est donc entachée d'un biais $bd_{iono_i}$ (biais de dérive ionosphérique) égal à :

$$\bar{bd}_{iono_i} = \beta_{odo}.\mathbf{t} \circ \mathbf{s}_i$$

S représente le vecteur directeur unitaire dans la direction de chaque axe à vue de satellite, celui-ci peut s'écrire dans le référentiel géométrique local selon la relation suivante:

$$\mathbf{s}_i = \cos(El^i)\cos(Az^i)\mathbf{i} + \cos(El^i)\sin(Az^i)\mathbf{j} + \sin(El^i)\mathbf{k} \qquad (1)$$

dans lequel :

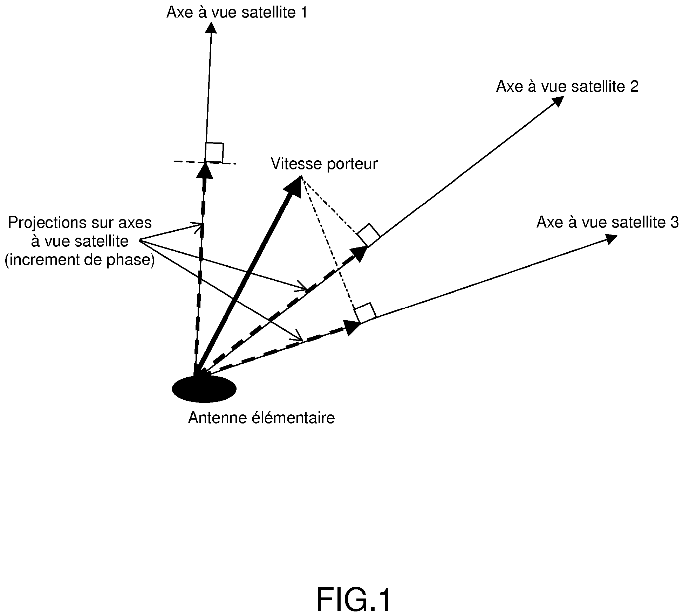

$\mathbf{i},\mathbf{j},\mathbf{k}$ sont les trois vecteurs unitaires du repère local ($\mathbf{X^b}$, $\mathbf{Y^b}$, $\mathbf{Z^b}$)
$El^i$ et $Az^i$ sont les angles d'élévation de chaque axe à vue i dans le repère local, conformément à la figure 1 ci-contre, en radians).

$\mathbf{t}$ représente le vecteur directeur unitaire de la trajectoire du train supposée rectiligne pendant la durée de mesure du Doppler intégré sur les signaux satellites (ce qui est légitime dans le cas d'applications ferroviaires ou maritime, sur une durée typique de 1seconde), celui-ci peut s'écrire, dans le référentiel géométrique local, selon la relation suivante :

$$\mathbf{t} = \cos(El_t)\cos(Az_t)\mathbf{i} + \cos(El_t)\sin(Az_t)\mathbf{j} + \sin(El_t)\mathbf{k} \qquad (2)$$

dans laquelle :

**i,j,k** sont les 3 vecteurs unitaires du repère local ($\mathbf{X^b, Y^b, Z^b}$)

$El^i$ et $Az^i$ sont les angles d'élévation et d'azimut de la direction de la trajectoire du train dans le repère local, supposé connu par ailleurs grâce au relevé de carte de voie ("map matching" en langue anglaise)

On a alors les relations suivantes:

$$\boldsymbol{\beta}_{\mathbf{odo}} = \beta_{odo}\mathbf{t}$$

$$\mathbf{i} \circ \boldsymbol{\beta}_{\mathbf{odo}} = \beta_{odo}\mathbf{i} \circ \mathbf{t} = \beta_{odo}.\cos(El_t).\cos(Az_t)$$

$$\mathbf{j} \circ \boldsymbol{\beta}_{\mathbf{odo}} = \beta_{odo}\mathbf{j} \circ \mathbf{t} = \beta_{odo}.\cos(El_t).\sin(Az_t)$$

$$\mathbf{k} \circ \boldsymbol{\beta}_{\mathbf{odo}} = \beta_{odo}\mathbf{k} \circ \mathbf{t} = \beta_{odo}.\sin(El_t)$$

dans lesquelles, l'opérateur " ° " représente le produit scalaire entre les vecteurs.

Lorsque n satellites sont visibles, l'ensemble des biais résiduels de dérive ionosphérique par axe à vue peut donc s'exprimer sous la forme suivante:

$$\begin{bmatrix} bd_{iono_1} \\ bd_{iono_2} \\ \vdots \\ bd_{iono_n} \end{bmatrix} = \begin{bmatrix} \mathbf{i} \circ \mathbf{s_1} & \mathbf{j} \circ \mathbf{s_1} & \mathbf{k} \circ \mathbf{s_1} \\ \mathbf{i} \circ \mathbf{s_2} & \mathbf{j} \circ \mathbf{s_2} & \mathbf{k} \circ \mathbf{s_2} \\ \vdots & \vdots & \vdots \\ \mathbf{i} \circ \mathbf{s_n} & \mathbf{j} \circ \mathbf{s_n} & \mathbf{k} \circ \mathbf{s_n} \end{bmatrix} \begin{bmatrix} \mathbf{i} \circ \boldsymbol{\beta}_{\mathbf{odo}} \\ \mathbf{j} \circ \boldsymbol{\beta}_{\mathbf{odo}} \\ \mathbf{k} \circ \boldsymbol{\beta}_{\mathbf{odo}} \end{bmatrix}$$

$$\begin{bmatrix} bd_{iono_1} \\ bd_{iono_2} \\ \vdots \\ bd_{iono_n} \end{bmatrix} = \beta_{odo}. \begin{bmatrix} \mathbf{i} \circ \mathbf{s_1} & \mathbf{j} \circ \mathbf{s_1} & \mathbf{k} \circ \mathbf{s_1} \\ \mathbf{i} \circ \mathbf{s_2} & \mathbf{j} \circ \mathbf{s_2} & \mathbf{k} \circ \mathbf{s_2} \\ \vdots & \vdots & \vdots \\ \mathbf{i} \circ \mathbf{s_n} & \mathbf{j} \circ \mathbf{s_n} & \mathbf{k} \circ \mathbf{s_n} \end{bmatrix} \begin{bmatrix} \mathbf{i} \circ \mathbf{t} \\ \mathbf{j} \circ \mathbf{t} \\ \mathbf{k} \circ \mathbf{t} \end{bmatrix}$$

L'originalité de la solution proposée consiste ainsi non seulement dans le fait de compenser les mesures de phase porteuses GNSS par les déplacements odométriques, mais également de résoudre ensuite la vitesse GNSS sur la base des mesures de Doppler-intégré obtenues après compensation, ceci grâce à l'expression précédente qui lie linéairement le vecteur des biais ionométriques résiduels et le biais de dérive odométrique.

La figure 1 représente la projection du vecteur vitesse du train en direction des axes à vue des satellites.

Le biais supplémentaire lié à la dérive odométrique ($\beta_{odo}$) alors peut être estimé par une résolution au moindre carré de la vitesse réalisée sur la base des Doppler-intégrés compensés, obtenus sur l'ensemble des axes à vue, mais nécessite un axe à vue supplémentaire pour sa résolution du vecteur : ($V_x$, $V_y$, $V_z$, $\delta_t$, $\beta_{odo}$).

Toutes les mesures de Doppler-intégré obtenues par axe à vue satellite seront donc affectées par un biais résiduel d'estimation de la dérive ionosphérique (le biais de dérive ionosphérique), issue d'un biais commun (le biais de dérive odométrique) correspondant à la dérive de la mesure odométrique.

$$\begin{bmatrix} \hat{m}_1 \\ \hat{m}_2 \\ \vdots \\ \hat{m}_n \end{bmatrix} = \begin{bmatrix} m_1 + bd_{iono_1} \\ m_2 + bd_{iono_2} \\ \vdots \\ m_n + bd_{iono_n} \end{bmatrix} + \begin{bmatrix} v_1 \\ v_2 \\ \vdots \\ v_n \end{bmatrix}$$

où,

$bd_{iono_i}$ est le biais résiduel de dérive ionosphérique par axe à vue i, en mètres, sur la durée d'observation $\Delta t$

$v_i$ est le bruit thermique de mesure du Doppler intégré supposé Gaussien centré, d'écart-type $\sigma_i$, sur la durée d'observation $\Delta t$, en mètres

$m_i$ correspond au doppler intégré vrai du déplacement sur la durée d'observation $\Delta t$, en mètres et

$\hat{m}_i$ correspond au Doppler intégré sur la durée d'observation $\Delta t$, estimé par le récepteur à partir de la phase porteuse dans la direction si du satellite i, en mètres

Ce biais s'ajoute au biais de dérive de l'horloge local du récepteur ($\delta_t$) qui est classiquement résolu dans le cas d'une estimation de vitesse du récepteur sur la base des mesures de doppler intégré par axe à vue satellites.

$$
\begin{bmatrix} \hat{m}_1 \\ \hat{m}_2 \\ \vdots \\ \hat{m}_n \end{bmatrix} = \begin{bmatrix} m_1 + bd_{iono_1} - c.\delta_t \\ m_2 + bd_{iono_2} - c.\delta_t \\ \vdots \\ m_n + bd_{iono_n} - c.\delta_t \end{bmatrix} + \begin{bmatrix} v_1 \\ v_2 \\ \vdots \\ v_n \end{bmatrix}
$$

où,

$\delta_t$ est le biais de dérive de l'horloge du récepteur, sur la durée d'observation $\Delta t$, en secondes

Soit encore, en remplaçant le biais de dérive ionosphérique par son expression en fonction de la dérive de l'odomètre :

$$
\begin{bmatrix} \hat{m}_1 \\ \hat{m}_2 \\ \vdots \\ \hat{m}_n \end{bmatrix} = \begin{bmatrix} m_1 - c.\delta_t \\ m_2 - c.\delta_t \\ \vdots \\ m_n - c.\delta_t \end{bmatrix} + \beta_{odo} \cdot \begin{bmatrix} \mathbf{i} \circ \mathbf{s_1} & \mathbf{j} \circ \mathbf{s_1} & \mathbf{k} \circ \mathbf{s_1} \\ \mathbf{i} \circ \mathbf{s_2} & \mathbf{j} \circ \mathbf{s_2} & \mathbf{k} \circ \mathbf{s_2} \\ \vdots & \vdots & \vdots \\ \mathbf{i} \circ \mathbf{s_n} & \mathbf{j} \circ \mathbf{s_n} & \mathbf{k} \circ \mathbf{s_n} \end{bmatrix} \begin{bmatrix} \mathbf{i} \circ \mathbf{t} \\ \mathbf{j} \circ \mathbf{t} \\ \mathbf{k} \circ \mathbf{t} \end{bmatrix} + \begin{bmatrix} v_1 \\ v_2 \\ \vdots \\ v_n \end{bmatrix}
$$

Sachant que le déplacement vrai (Doppler intégré) par axe à vue satellite est relié à la vitesse vraie du train par la relation classique suivante :

$$
\begin{bmatrix} m_1 \\ m_2 \\ \vdots \\ m_n \end{bmatrix} = \begin{bmatrix} \mathbf{i} \circ \mathbf{s_1} & \mathbf{j} \circ \mathbf{s_1} & \mathbf{k} \circ \mathbf{s_1} \\ \mathbf{i} \circ \mathbf{s_2} & \mathbf{j} \circ \mathbf{s_2} & \mathbf{k} \circ \mathbf{s_2} \\ \vdots & \vdots & \vdots \\ \mathbf{i} \circ \mathbf{s_n} & \mathbf{j} \circ \mathbf{s_n} & \mathbf{k} \circ \mathbf{s_n} \end{bmatrix} \begin{bmatrix} \omega_X \\ \omega_Y \\ \omega_Z \end{bmatrix}
$$

où,

$\omega_X, \omega_Y$ et $\omega_Z$ sont les composantes de la vitesse vraie du train dans le repère local,

$m_i$ est le doppler intégrée vrai pour le satellite i,

Il est alors possible d'exprimer une relation linéaire la relation entre les mesures de doppler intégrée et les composantes d'un vecteur d'état prenant en compte la vitesse du train, le biais de dérive odométrique et le biais de dérive d'horloge du récepteur :

EP 3 353 573 B1

$$\begin{bmatrix} \hat{m}_1 \\ \hat{m}_2 \\ \vdots \\ \hat{m}_n \end{bmatrix} = \begin{bmatrix} \mathbf{i} \circ \mathbf{s_1} & \mathbf{j} \circ \mathbf{s_1} & \mathbf{k} \circ \mathbf{s_1} \\ \mathbf{i} \circ \mathbf{s_2} & \mathbf{j} \circ \mathbf{s_2} & \mathbf{k} \circ \mathbf{s_2} \\ \vdots & \vdots & \vdots \\ \mathbf{i} \circ \mathbf{s_n} & \mathbf{j} \circ \mathbf{s_n} & \mathbf{k} \circ \mathbf{s_n} \end{bmatrix} \begin{bmatrix} \omega_X \\ \omega_Y \\ \omega_Z \end{bmatrix} - \begin{bmatrix} c.\delta_t \\ c.\delta_t \\ \vdots \\ c.\delta_t \end{bmatrix} + \beta_{odo} \cdot \begin{bmatrix} \mathbf{i} \circ \mathbf{s_1} & \mathbf{j} \circ \mathbf{s_1} & \mathbf{k} \circ \mathbf{s_1} \\ \mathbf{i} \circ \mathbf{s_2} & \mathbf{j} \circ \mathbf{s_2} & \mathbf{k} \circ \mathbf{s_2} \\ \vdots & \vdots & \vdots \\ \mathbf{i} \circ \mathbf{s_n} & \mathbf{j} \circ \mathbf{s_n} & \mathbf{k} \circ \mathbf{s_n} \end{bmatrix} \begin{bmatrix} \mathbf{i} \circ \mathbf{t} \\ \mathbf{j} \circ \mathbf{t} \\ \mathbf{k} \circ \mathbf{t} \end{bmatrix} + \begin{bmatrix} v_1 \\ v_2 \\ \vdots \\ v_n \end{bmatrix}$$

Soit encore,

$$\begin{bmatrix} \hat{m}_1 \\ \hat{m}_2 \\ \vdots \\ \hat{m}_n - \end{bmatrix} = \begin{bmatrix} \mathbf{i} \circ \mathbf{s_1} & \mathbf{j} \circ \mathbf{s_1} & \mathbf{k} \circ \mathbf{s_1} \\ \mathbf{i} \circ \mathbf{s_2} & \mathbf{j} \circ \mathbf{s_2} & \mathbf{k} \circ \mathbf{s_2} \\ \vdots & \vdots & \vdots \\ \mathbf{i} \circ \mathbf{s_n} & \mathbf{j} \circ \mathbf{s_n} & \mathbf{k} \circ \mathbf{s_n} \end{bmatrix} \begin{bmatrix} \omega_X - \beta_{odo}.\mathbf{i} \circ \mathbf{t} \\ \omega_Y - \beta_{odo}.\mathbf{j} \circ \mathbf{t} \\ \omega_Z - \beta_{odo}.\mathbf{k} \circ \mathbf{t} \end{bmatrix} - \begin{bmatrix} c.\partial_t \\ c.\partial_t \\ \vdots \\ c.\partial_t \end{bmatrix} + \begin{bmatrix} v_1 \\ v_2 \\ \vdots \\ v_n \end{bmatrix}$$

avec $\partial_t$ est le biais de dérive de l'horloge du récepteur, sur la durée d'observation $\Delta t$, en secondes

Et, après développement du produit et factorisation des termes du vecteur d'état :

$$\begin{bmatrix} m_1 \\ m_2 \\ \vdots \\ m_n \end{bmatrix} = \begin{bmatrix} \mathbf{i} \circ \mathbf{s_1} & \mathbf{j} \circ \mathbf{s_1} & \mathbf{k} \circ \mathbf{s_1} & -((\mathbf{i} \circ \mathbf{s_1}).(\mathbf{i} \circ \mathbf{t}) + (\mathbf{j} \circ \mathbf{s_1}).(\mathbf{j} \circ \mathbf{t}) + (\mathbf{k} \circ \mathbf{s_1}).(\mathbf{k} \circ \mathbf{t})) & -c \\ \mathbf{i} \circ \mathbf{s_2} & \mathbf{j} \circ \mathbf{s_2} & \mathbf{k} \circ \mathbf{s_2} & -((\mathbf{i} \circ \mathbf{s_2}).(\mathbf{i} \circ \mathbf{t}) + (\mathbf{j} \circ \mathbf{s_2}).(\mathbf{j} \circ \mathbf{t}) + (\mathbf{k} \circ \mathbf{s_2}).(\mathbf{k} \circ \mathbf{t})) & -c \\ \vdots & \vdots & \vdots & \vdots & \vdots \\ \mathbf{i} \circ \mathbf{s_n} & \mathbf{j} \circ \mathbf{s_n} & \mathbf{k} \circ \mathbf{s_n} & -((\mathbf{i} \circ \mathbf{s_n}).(\mathbf{i} \circ \mathbf{t}) + (\mathbf{j} \circ \mathbf{s_n}).(\mathbf{j} \circ \mathbf{t}) + (\mathbf{k} \circ \mathbf{s_n}).(\mathbf{k} \circ \mathbf{t})) & -c \end{bmatrix} \cdot \begin{bmatrix} \omega_X \\ \omega_Y \\ \omega_Z \\ \beta_{odo} \\ \partial_t \end{bmatrix} + \begin{bmatrix} v_1 \\ v_2 \\ \vdots \\ v_n \end{bmatrix}$$

$$(2a)$$

ou encore,

$$\mathbf{m} = \underline{\mathbf{H}}.\omega + \mathbf{v}$$

$$(2b)$$

avec,

$$\omega = \begin{bmatrix} \varpi_x \\ \varpi_y \\ \omega_z \\ \beta_{odo} \\ \delta_t \end{bmatrix}$$

et

$$\underline{\mathbf{H}} = \begin{bmatrix} \mathbf{i} \circ \mathbf{s_1} & \mathbf{j} \circ \mathbf{s_1} & \mathbf{k} \circ \mathbf{s_1} & -((\mathbf{i} \circ \mathbf{s_1}).(\mathbf{i} \circ \mathbf{t}) + (\mathbf{j} \circ \mathbf{s_1}).(\mathbf{j} \circ \mathbf{t}) + (\mathbf{k} \circ \mathbf{s_1}).(\mathbf{k} \circ \mathbf{t})) & -c \\ \mathbf{i} \circ \mathbf{s_2} & \mathbf{j} \circ \mathbf{s_2} & \mathbf{k} \circ \mathbf{s_2} & -((\mathbf{i} \circ \mathbf{s_2}).(\mathbf{i} \circ \mathbf{t}) + (\mathbf{j} \circ \mathbf{s_2}).(\mathbf{j} \circ \mathbf{t}) + (\mathbf{k} \circ \mathbf{s_2}).(\mathbf{k} \circ \mathbf{t})) & -c \\ \vdots & \vdots & \vdots & \vdots & \vdots \\ \mathbf{i} \circ \mathbf{s_n} & \mathbf{j} \circ \mathbf{s_n} & \mathbf{k} \circ \mathbf{s_n} & -((\mathbf{i} \circ \mathbf{s}_n).(\mathbf{i} \circ \mathbf{t}) + (\mathbf{j} \circ \mathbf{s}_n).(\mathbf{j} \circ \mathbf{t}) + (\mathbf{k} \circ \mathbf{s}_n).(\mathbf{k} \circ \mathbf{t})) & -c \end{bmatrix}$$

Le vecteur d'état du train s'estime alors par moindres carrés:

$$\hat{\omega} = (\mathbf{H}^T\mathbf{H})^{-1}\mathbf{H}^T\mathbf{m} \qquad (3)$$

En écrivant le vecteur des erreurs d'estimation sous la forme $\tilde{\omega} = \omega - \hat{\omega}$, on a:

$$\tilde{\omega} = \omega - \hat{\omega} = -(\mathbf{H}^T\mathbf{H})^{-1}\mathbf{H}^T\mathbf{v} \qquad (4)$$

La matrice de covariance des erreurs est alors donnée (en supposant une distribution normale du bruit résiduel) par :

$$\mathrm{Var}(\tilde{\omega}) = E[(\omega - \hat{\omega})(\omega - \hat{\omega})^T] \\ = (\mathbf{H}^T\mathbf{H})^{-1}\mathbf{H}^T\mathbf{R}\mathbf{H}(\mathbf{H}^T\mathbf{H})^{-1} \qquad (5)$$

où $\mathbf{R} = E(\mathbf{v}\mathbf{v}^T)$ est la matrice de covariance en bruit seul

En supposant que l'écart type du bruit de mesure de Doppler intégré pour chaque axe à vue est identique à $\sigma_v$, alors la matrice d'erreur de l'estimé devient:

$$\mathrm{Var}(\tilde{\omega}) = \sigma_v^2 (\mathbf{H}^T\mathbf{H})^{-1} \qquad (6a)$$

où encore, sous forme normalisée:

$$\Sigma = \frac{\mathrm{Var}(\tilde{\omega})}{\sigma_v^2} = (\mathbf{H}^T\mathbf{H})^{-1} \qquad (6b)$$

Aussi, la matrice H évolue selon la configuration de la constellation satellite (nombre de satellites, directions des axes à vues), modifiant ainsi la précision de navigation.

La racine carrée de la trace de cette variance représente la dilution de précision due à la géométrie des satellites (GDOP) permettant d'estimer la performance de la navigation résultante;

$$GDOP = \sqrt{Trace[(\mathbf{H}^T\mathbf{H})^{-1}]} \qquad (7)$$

Typiquement, un GDOP (GPS) de 3 et un bruit de mesure de phase de 1 cm (en bruit thermique seul, une fois résolues les erreurs ionosphériques) conduit à une précision de vitesse de 3cm/s (0,1 km/h), dans le cas de mesures réalisées toutes les secondes et à une précision de positionnement absolu après filtrage code-porteuse (toujours après suppression de l'erreur ionosphérique) de quelques centimètres après une minute de filtrage.

L'erreur résiduelle est équivalente pour l'estimation de la dérive de l'odomètre, ce qui conduit à une erreur d'environ 2m en cas de masquage d'une minute du GNSS.

La résolution sans biais ionosphérique de la vitesse GNSS instantanée du train et du biais instantané de dérive de l'odomètre permet alors :

-   de reconstituer l'évolution de la phase porteuse dé-biaisée et de réaliser le filtrage code-porteuse des mesures de pseudo-distance, pour obtenir une précision de positionnement centimétrique du train à près convergence du filtre code-porteuse (typiquement de 60s à 100s)

- de surveiller sur la base de l'évolution de la phase porteuse les erreurs de trajet multiples (et d'interférence), en vue d'améliorer nettement les performances en intégrité du système.

- de réaliser une estimation permanente du biais de l'odomètre qui permet d'augmenter la continuité du positionnement du train en cas de perte de disponibilité du GNSS (perte de visibilité, détection de trajets multiples, indisponibilité de l'intégrité, ...).

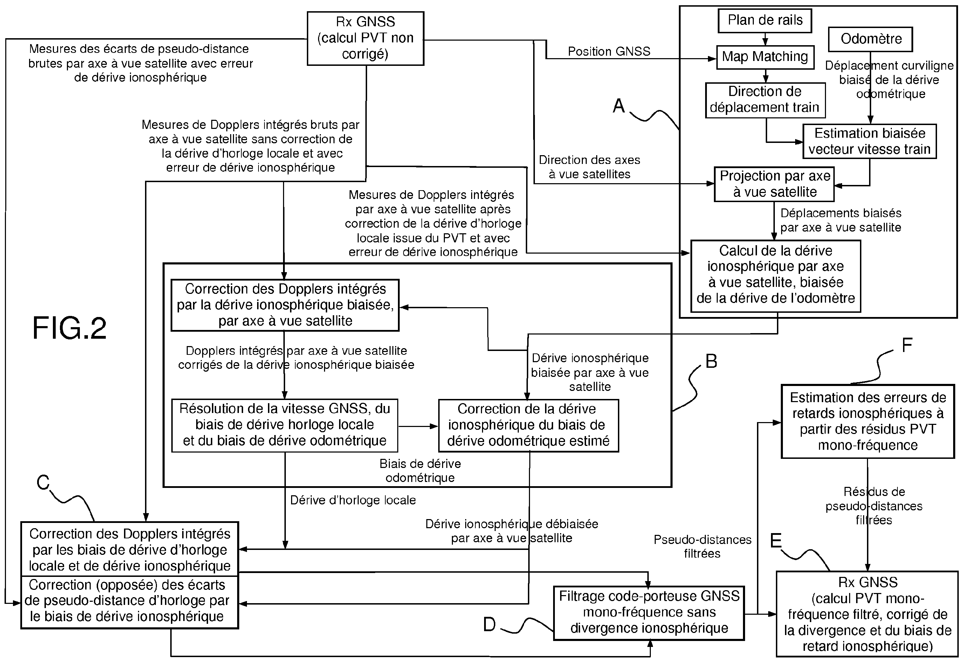

La figure 2 illustre un mode de mise en œuvre du procédé selon un aspect de l'invention.

La figure 2 décrit l'ensemble des étapes conduisant à la fourniture finale d'un point PVT GNSS mono-fréquence précis (i.e. de l'ordre de 1cm d'erreur), classiquement obtenu après filtrage code-porteuse, mais ici après que les mesures des évolutions de phase de code (écarts de pseudo-distance) et de porteuse (doppler intégré) aient été débarrassées de l'erreur de divergence code porteuse liée à la propagation des ondes GNSS dans l'ionosphère, qui, normalement, limitent la durée du filtrage.

On entend par point PVT, la résolution par moindres carrés de la position P, de la vitesse V et du biais de temps de l'horloge locale T, réalisée par le récepteur GPS sur la base des mesures brutes de pseudo-distance et de doppler intégré, par axe à vue satellites

Cette observation de la divergence de l'erreur ionosphérique est rendue partiellement possible, selon un premier principe innovant, grâce à des mesures supplémentaires de déplacement fournies par un odomètre et un plan de route (rail dans le cas du ferroviaire). "Partiellement", parce que l'odomètre lui-même dérive et donc ne permet pas seul de corriger la divergence ionosphérique.

Pour résoudre ce problème, le deuxième principe innovant, consiste à résoudre à court terme (chaque seconde ou centaine de milliseconde) simultanément la vitesse, la dérive de temps de l'horloge locale (biais de dérive de l'horloge) et la dérive de l'odomètre (biais de dérive odométrique), dont on a démontré l'observabilité à partir des mesures de Doppler intégré brutes fournis classiquement par le récepteur GNSS.

Ceci fait, le troisième principe innovant consiste à réaliser un filtrage code-porteuse sur la base des mesures de pseudo-distance et de Doppler intégré débarrassées (à chaque récurrence de 1 seconde ou d'une centaine de millisecondes) de la dérive ionosphérique ainsi estimée, puis à réaliser un point PVT précis à base des mesures de pseudo-distance filtrées, ceci avec un récepteur mono-fréquence et sans augmentation SBAS, et sans restriction d'application géographique liées à la divergence ionosphérique (zones équatoriales par exemple).

Enfin une dernier principe innovant consiste à estimer les biais de retard ionosphérique par axe à vue (et non plus des erreur de dérives ionosphériques) à partir des résidus de pseudo-distances obtenus après moindres carrés; le bruit de mesure de pseudo-distance après filtrage code-porteuse étant négligeable (quelques centimètres) par rapport au biais de retard ionosphérique (plusieurs dizaines de mètres), l'observation périodique (toutes les 10 minutes à 30 minutes environ) des résidus de pseudo-distances obtenus après moindres carrés lors de la résolution de la position (P) et leur filtrage sur une durée de 10 à 100 secondes environ fournit une bonne estimation de ces seuls biais ionosphériques, qui peuvent ensuite être réutilisés pour corriger les mesures de pseudo-distances filtrées code-porteuse.

Il faut rappeler que la divergence de l'erreur ionosphérique affecte simultanément les mesures de code (pseudo-distances) et de porteuses (Doppler intégré), mais en sens inverses, ce qui empêche, dans les zones affectées par les variations de propagation ionosphérique, de réaliser un filtrage code-porteuse (soustraction entre les évolutions de pseudo-distance estimées à partir du code large bande, et de celles estimées à partir de la phase porteuse).

A la base, la comparaison entre le Doppler intégré et le déplacement fourni par l'odomètre sert d'abord à évaluer la dérive de phase de porteuse (ou Doppler intégré) liée à la propagation ionosphérique.

Cette comparaison permet de réduire l'erreur de mesure du déplacement observé au travers de la phase GNSS, et ainsi permet de réduire l'erreur de position après filtrage "code-porteuse" (i.e. intégration au fil du temps des mesures de pseudo-distances (fortement bruitées) une fois débarrassées (soustraites) du déplacement fourni par le Doppler intégré (la présence d'une dérive de phase liée à l'erreur ionosphérique introduit sinon un biais qui limite la convergence, donc la précision de positions accessibles).

Le biais de vitesse de l'odomètre (biais de dérive odométrique) empêche cependant une observation "directe" de l'erreur ionosphérique; par contre, cette dérive du déplacement odométrique étant commune, elle peut être observée par projection de cette erreur sur chaque axe à vue, comme explicité précédemment (cf fig 1).

De base la propagation ionosphérique entraine un retard inconnu sur la mesure de pseudo-distance ("erreur ionosphérique").

Cette erreur évolue dans le temps selon la nature physique de la couche ionosphérique (dérive de l'erreur ionosphérique, mentionnée comme "dérive ionosphérique"). Tant qu'on n'a pas estimé cette erreur de dérive elle introduit un "biais de dérive ionosphérique" sur les mesures de Doppler intégré.

La couche étant dispersive, cette évolution se fait en sens inverse sur les mesures large bande de code (pseudo-distance) et de porteuse (phase porteuse dont découle le doppler intégré).

Il n'y a donc pas deux calculs, mais un traitement en deux étapes A et B:

Etape A) D'abord, estimation toutes les 1 à 10 secondes des biais de propagation ionosphérique (dérive ionosphérique) par axe à vue, par soustraction aux mesures de Doppler intégré par axe à vue satellite, du déplacement odométrique (biaisé) projeté sur les axes à vue;

Etape B) Puis, estimation toutes les 1 à 10 secondes du biais de dérive de l'horloge locale (qui fournit le temps local du récepteur) et du biais de dérive odométrique, par résolution au moindre carré de la vitesse GNSS Une fois connu, le biais de l'odomètre, on réalise les traitements suivants :

Etape C) Correction des biais de propagation ionosphériques obtenus en étape A) par les biais de dérive d'horloge et de dérive odométrique obtenus en étape B), pour chaque axe à vue de satellite.

Etape D) Filtrage code porteuse, des mesure de pseudo-distance par les mesures de doppler-intégrés débarrassées de leur biais de propagation ionosphériques, sur une durée allant de quelques dizaines de secondes à quelques centaines de secondes..

Etape E) résolution classique par moindre carré de la position et du temps GNSS , à partir des mesures de pseudo-distance filtrée obtenues en étape D).

Pour être complet, il faut aussi rajouter une dernière étape F) d'estimation toutes les 10 minutes à 30 minutes environ des erreurs de retard ionosphérique (et non plus des erreurs de dérive ionosphérique) à partir des résidus de pseudo-distances obtenus par résolution au moindres carrés de la position chaque seconde ; les résidus sont ensuite filtrés sur une durée comprise entre 10 et 100 secondes ,.

Une fois ces erreurs de retard obtenues en phase d'initialisation, le point PVT précis peut-être entretenu par correction continue de la dérive ionosphérique et par utilisation de l'odomètre (corrigé de sa dérive) en cas de masquage du GNSS.

Il faut aussi mentionner les retombées "naturelles" du filtrage code-porteuse sans dérive ionosphérique, que sont la réduction partielle des erreurs liées aux trajets multiples et aux interférences (en fait, c'est très important pour les applications ferroviaires dans les zones tropicales/équatoriale ou dans le grand-nord), qui impactent significativement la précision du positionnement et réduisent l'intégrité du GNSS.

## Revendications

1. Procédé de positionnement ferroviaire, à partir du déplacement d'un train déterminé par un récepteur de signaux d'un système de navigation par satellites embarqué à bord du train, et du déplacement dudit train déterminé par un odomètre embarqué à bord du train et une cartographie des voies ferroviaires, par détermination périodique du biais de propagation ionosphérique correspondant à un biais de propagation de la phase de porteuse de signaux du système de navigation par satellites, **caracterisé en ce que** la détermination périodique du biais de propagation ionosphérique comprend les étapes consistant à, par axe à vue des satellites du système de navigation :

   - estimer (A) le biais de dérive ionosphérique sur une durée d'observation par différence entre une estimation de Doppler intégré réalisée par le récepteur et une estimation biaisée du déplacement du train réalisée par l'odomètre;
   - estimer (B) le biais de dérive odométrique et le biais de dérive de l'horloge locale du récepteur, par résolution par moindres carrés de la vitesse du train, du biais de dérive de l'horloge locale du récepteur, et du biais de dérive odométrique;
   - corriger (B) l'estimation de la dérive ionosphérique, par soustraction du biais de dérive odométrique estimé; et
   - corriger (C) le terme de Doppler intégré par le biais de dérive de l'horloge locale du récepteur et de dérive ionosphérique, et corriger les écarts de pseudo-distance par le biais de dérive ionosphérique.

2. Procédé selon la revendication 1, comprenant, en outre, une étape consistant à, par axe à vue des satellites du système de navigation, filtrer (D) les mesures de pseudo-distances par les mesures de Doppler intégrés débarrassées de leur biais ionosphérique sur une durée allant de quelques dizaines de secondes à quelques centaines de secondes.

**3.** Procédé selon la revendication 2, comprenant, en outre, une étape consistant à, par axe à vue des satellites du système de navigation, estimer périodiquement (F) l'erreur de retard ionosphérique à partir des résidus de pseudo-distance issue du filtrage code-porteuse, fournis par résolution au moindres carrés de la position et du temps du récepteur en mono-fréquence.

**4.** Procédé selon la revendication 3, comprenant, en outre, une étape consistant :

- à réaliser une première estimation (toutes les secondes) des résidus instantanés de pseudo-distances filtrées, obtenus par d'une première étape de résolution par moindres carrés de la position et du biais de temps de l'horloge locale du récepteur,
- puis à filtrer ces résidus instantanés de pseudo-distances sur une durée de 10 secondes à 100 secondes,
- et enfin à corriger les pseudo-distances obtenues ultérieurement avec ces résidus filtrés mémorisés, sur un horizon de temps de 10 minutes à 30 minutes.

**5.** Procédé selon la revendication 4, comprenant, en outre, une étape consistant à, par axe à vue des satellites du système de navigation, résoudre (E) par moindres carrés la position et le biais de temps de l'horloge locale du récepteur, à partir desdites mesures de pseudo-distances filtrées.

**6.** Procédé selon l'une des revendications précédentes, dans lequel l'estimation du terme de Doppler intégré déterminé par le récepteur est effectuée sur une durée comprise entre 10 et 100 secondes durant laquelle la trajectoire du train est considérée comme rectiligne.

**7.** Système de positionnement ferroviaire, à partir du déplacement d'un train déterminé par un récepteur de signaux d'un système de navigation par satellites embarqué à bord du train, et du déplacement dudit train déterminé par un odomètre embarqué à bord du train et une cartographie des voies ferroviaires, par détermination du biais de propagation ionosphérique correspondant à un biais de propagation de la phase de porteuse de signaux du système de navigation par satellites, **caractérisé en ce que** le système comprend un calculateur configuré pour effectuer les étapes consistant à, par axe à vue des satellites du système de navigation :

- estimer la dérive ionosphérique biaisée par différence entre un terme de Doppler intégré déterminé par le récepteur et une estimation biaisée du déplacement du train par l'odomètre;
- estimer le biais de dérive odométrique et le biais de dérive de l'horloge locale du récepteur et de dérive odométrique, par résolution par moindres carrés de la vitesse déterminée par le système de navigation par satellites, du biais de dérive de l'horloge locale du récepteur, et du biais de dérive odométrique;
- corriger l'estimation de la dérive ionosphérique, par soustraction du biais de dérive odométrique estimé; et
- corriger le terme de Doppler intégré par le biais de dérive de l'horloge locale du récepteur et de dérive ionosphérique, et corriger les écarts de pseudo-distance par le biais de dérive ionosphérique.

**Patentansprüche**

**1.** Verfahren zur Bahnpositionierung anhand der durch einen Signalempfänger eines Satelliten-Navigationssystem bestimmten Bewegung eines Zuges, welches an Bord des Zuges mitgeführt wird, und der Bewegung des Zuges, welche durch einen an Bord des Zuges mitgeführten Wegstreckenmesser und eine Kartographie der Schienenwege bestimmt wird, durch periodisches Bestimmen einer der Fortpflanzungsverzerrung der Phase des Trägersignals von Signalen des Satelliten-Navigationssystems entsprechenden ionosphärischen Fortpflanzungsverzerrung, **dadurch gekennzeichnet, dass** die periodische Bestimmung der ionosphärischen Fortpflanzungsverzerrung folgende Schritte pro Achse in Sicht der Satelliten des Navigationssystems beinhaltet:

- Schätzen (A) der ionosphärischen Driftverzerrung über eine Beobachtungsdauer, als Differenz zwischen einer Schätzung anhand eines integrierten Dopplers, welche durch den Empfänger bewerkstelligt wird und einer verzerrten Schätzung der Bewegung des Zuges, welche durch den Wegstreckenmesser bewerkstelligt wird;
- Schätzen (B) der Wegstreckenmesser-Driftverzerrung und der Driftverzerrung der lokalen Uhr des Empfängers, durch Auflösung der kleinsten Quadrate der Zuggeschwindigkeit, der Driftverzerrung der lokalen Uhr des Empfängers und der Wegstreckenmesser-Driftverzerrung;
- Korrigieren (B) der Schätzung des ionosphärischen Drifts, durch Subtraktion der geschätzten Wegstreckenmesser-Driftverzerrung; und
- Korrigieren (C) des integrierten Doppler-Terms mithilfe der Driftverzerrung der lokalen Uhr des Empfängers und der ionosphärischen Driftverzerrung, und Korrigieren der Pseudoabstandsabweichungen mithilfe der ionosphärischen Driftverzerrung.

2. Verfahren nach Anspruch 1, zudem beinhaltend einen Schritt des Filterns (D), pro Achse in Sicht der Satelliten des Navigationssystems, der Pseudoabständemessungen durch die Messungen integrierter Doppler, welche um ihre ionosphärische Verzerrung bereinigt sind, über eine Dauer, welche von einigen Dutzend Sekunden bis zu einigen Hundert Sekunden reicht.

3. Verfahren nach Anspruch 2, zudem beinhaltend einen Schritt des periodischen Schätzens (F), pro Achse in Sicht der Satelliten des Navigationssystems, des ionosphärischen Verzögerungsfehlers anhand der Rückstände eines Pseudoabstandes, welcher aus der Trägersignal-Code-Filterung stammt, welche durch die Auflösung der kleinsten Quadrate der Position und der Zeit des Empfängers in Monofrequenz bereitgestellt werden.

4. Verfahren nach Anspruch 3, zudem beinhaltend folgenden Schritt:

- Bewerkstelligen einer ersten Schätzung (jede Sekunde) der augenblicklichen Rückstände von gefilterten Pseudoabständen, welche in einem ersten Schritt der Auflösung der kleinsten Quadrate der Position und der Zeitverzerrung der lokalen Uhr des Empfängers erzielt werden,
- gefolgt von Filtern dieser augenblicklichen Rückstände von gefilterten Pseudoabständen über eine Dauer von 10 Sekunden bis 100 Sekunden,
- und abschließend, Korrigieren der späteren erzielten Pseudoabstände mit diesen gespeicherten, gefilterten Rückständen, über einen Zeitrahmen von 10 Minuten bis 30 Minuten.

5. Verfahren nach Anspruch 4, zudem beinhaltend einen Schritt des Auflösens (E), pro Achse in Sicht der Satelliten des Navigationssystems, der kleinsten Quadrate der Position und der Zeitverzerrung der lokalen Uhr des Empfängers, anhand der Messungen der gefilterten Pseudoabstände.

6. Verfahren nach einem der vorhergehenden Ansprüche, bei welchem die Schätzung des integrierten Doppler-Terms, welcher durch den Empfänger bestimmt wird, über einen Zeitraum zwischen 10 und 100 Sekunden bewerkstelligt wird, in dessen Verlauf die Bahn des Zugs als geradlinig betrachtet wird.

7. System zur Bahnpositionierung anhand der durch einen Signalempfänger eines Satelliten-Navigationssystem bestimmten Bewegung eines Zuges, welches an Bord des Zuges mitgeführt wird, und der Bewegung des Zuges, welche durch einen an Bord des Zuges mitgeführten Wegstreckenmesser und eine Kartographie der Schienenwege bestimmt wird, durch Bestimmen einer der Fortpflanzungsverzerrung der Phase des Trägersignals von Signalen des Satelliten-Navigationssystems entsprechenden ionosphärischen Fortpflanzungsverzerrung, **dadurch gekennzeichnet, dass** das System Folgendes beinhaltet:
einen Rechner, welcher konfiguriert ist, um folgende Schritte pro Achse in Sicht der Satelliten des Navigationssystems durchzuführen:

- Schätzen des verzerrten ionosphärischen Drifts durch eine Differenz zwischen einem integrierten Doppler-Term, welcher durch den Empfänger bestimmt wird, und einer verzerrten Schätzung der Bewegung des Zuges, welche durch den Wegstreckenmesser bewerkstelligt wird;
- Schätzen der Wegstreckenmesser-Driftverzerrung und der Driftverzerrung der lokalen Uhr des Empfängers und des Wegstreckenmesser-Drifts, durch Auflösung der kleinsten Quadrate der durch das Satelliten-Navigationssystem bestimmten Geschwindigkeit, der Driftverzerrung der lokalen Uhr des Empfängers und der Wegstreckenmesser-Driftverzerrung;
- Korrigieren der Schätzung des ionosphärischen Drifts, durch Subtraktion der geschätzten Wegstreckenmesser-Driftverzerrung; und
- Korrigieren des integrierten Doppler-Terms mithilfe der Driftverzerrung der lokalen Uhr des Empfängers und der ionosphärischen Driftverzerrung, und Korrigieren der Pseudoabstandsabweichungen mithilfe der ionosphärischen Driftverzerrung.

Claims

1. A railway positioning method, based on the movement of a train determined by a signal receiver of a satellite navigation system embedded onboard the train, and on the movement of said train determined by an odometer embedded onboard the train, and a map of the railway tracks, by periodic determination of the ionospheric propagation bias corresponding to a propagation bias of the signal carrier phase of the satellite navigation system, **characterized in that** the periodic determination of the ionospheric propagation bias comprises the steps of, by line of sight of the satellites of the navigation system:

- estimating (A) the ionospheric drift bias over an observation period by difference between an integrated Doppler estimation performed by the receiver and a biased estimation of the movement of the train performed by the odometer;
- estimating (B) the odometer drift bias and the drift bias of the local clock of the receiver, by least squares resolution of the speed of the train, of the drift bias of the local clock of the receiver, and of the odometer drift bias;
- correcting (B) the estimation of the ionospheric drift, by subtraction of the estimated odometer drift bias; and
- correcting (C) the integrated Doppler term using the drift bias of the local clock of the receiver and the ionospheric drift bias, and correcting the pseudo-distance deviations using the ionospheric drift bias.

2. The method as claimed in claim 1, further comprising a step of, by line of sight of the satellites of the navigation system, filtering (D) the pseudo-distance measurements by the integrated Doppler measurements stripped of their ionospheric bias over a period ranging from a few tens of seconds to a few hundreds of seconds.

3. The method as claimed in claim 2, further comprising a step of, by line of sight of the satellites of the navigation system, periodically estimating (F) the ionospheric delay error based on pseudo-distance residues derived from the code-carrier filtering, supplied by least squares resolution of the position and of the time of the receiver in single-frequency mode.

4. The method as claimed in claim 3, further comprising a step of:

- performing a first estimation (every second) of the instantaneous filtered pseudo-distances residues, obtained by a first step of least squares resolution of the position and of the time bias of the local clock of the receiver,
- then filtering these instantaneous pseudo-distance residues over a period of 10 seconds to 100 seconds,
- and finally correcting the pseudo-distances obtained subsequently with these stored, filtered residues, over a time horizon of 10 minutes to 30 minutes.

5. The method as claimed in claim 4, further comprising a step of, by line of sight of the satellites of the navigation system, resolving (E) by least squares the position and the time bias of the local clock of the receiver, on the basis of said filtered pseudo-distance measurements.

6. The method as claimed in one of the preceding claims, in which the estimation of the integrated Doppler term determined by the receiver is performed over a period of between 10 and 100 seconds during which the trajectory of the train is considered rectilinear.

7. A railway positioning system, based on the movement of a train determined by a signal receiver of a satellite navigation system embedded onboard the train, and on the movement of said train determined by an odometer embedded onboard the train, and a map of the railway tracks, by determination of the ionospheric propagation bias corresponding to a propagation bias of the signal carrier phase of the satellite navigation system, **characterized in that** the system comprises a calculator configured to perform the steps of, by line of sight of the satellites of the navigation system:

- estimating the biased ionospheric drift by difference between an integrated Doppler term determined by the receiver and a biased estimation of the movement of the train by the odometer;
- estimating the odometer drift bias and the drift bias of the local clock of the receiver and the odometer drift, by least squares resolution of the speed determined by the satellite navigation system, of the drift bias of the local clock of the receiver, and of the odometer drift bias;
- correcting the estimation of the ionospheric drift, by subtraction of the estimated odometer drift bias; and
- correcting the integrated Doppler term using the drift bias of the local clock of the receiver and the ionospheric drift bias, and correcting the pseudo-distance deviations using the ionospheric drift bias.

Axe à vue satellite 1

Axe à vue satellite 2

Vitesse porteur

Axe à vue satellite 3

Projections sur axes
à vue satellite
(increment de phase)

Antenne élémentaire

FIG.1

FIG.2

Rx GNSS (calcul PVT non corrigé)

Mesures des écarts de pseudo-distance brutes par axe à vue satellite avec erreur de dérive ionosphérique

Mesures de Dopplers intégrés bruts par axe à vue satellite sans correction de la dérive d'horloge locale et avec erreur de dérive ionosphérique

Position GNSS

Direction des axes à vue satellites

Mesures de Dopplers intégrés par axe à vue satellite après correction de la dérive d'horloge locale issue du PVT et avec erreur de dérive ionosphérique

Plan de rails

Odomètre

Map Matching

Déplacement curviligne biaisé de la dérive odométrique

Direction de déplacement train

A

Estimation biaisée vecteur vitesse train

Projection par axe à vue satellite

Déplacements biaisés par axe à vue satellite

Calcul de la dérive ionosphérique par axe à vue satellite, biaisée de la dérive de l'odomètre

Correction des Dopplers intégrés par la dérive ionosphérique biaisée, par axe à vue satellite

Dopplers intégrés par axe à vue satellite corrigés de la dérive ionosphérique biaisée

Dérive ionosphérique biaisée par axe à vue satellite

B

Résolution de la vitesse GNSS, du biais de dérive horloge locale et du biais de dérive odométrique

Correction de la dérive ionosphérique du biais de dérive odométrique estimé

Estimation des erreurs de retards ionosphériques à partir des résidus PVT mono-fréquence

F

Biais de dérive odométrique

C

Dérive d'horloge locale

Dérive ionosphérique débiaisée par axe à vue satellite

Résidus de pseudo-distances filtrées

Correction des Dopplers intégrés par les biais de dérive d'horloge locale et de dérive ionosphérique

Pseudo-distances filtrées

E

Correction (opposée) des écarts de pseudo-distance d'horloge par le biais de dérive ionosphérique

Filtrage code-porteuse GNSS mono-fréquence sans divergence ionosphérique

D

Rx GNSS (calcul PVT mono-fréquence filtré, corrigé de la divergence et du biais de retard ionosphérique)

EP 3 353 573 B1

## RÉFÉRENCES CITÉES DANS LA DESCRIPTION

**Littérature non-brevet citée dans la description**

- GNSS-Based Sensor Fusion for Telematic Applications in Railway Traffic. **AUTEUR S. BEDRICH.** GNSS 2004 - PROCEEDINGS OF THE 17TH INTERNATIONAL TECHNICAL MEETING OF THE SATELLITE DIVISION OF THE INSTITUTE OF NAVIGATION (ION GNSS 2004). THE INSTITUTE OF NAVIGATION, 24 Septembre 2004, 681-69